# EUROPEAN PATENT APPLICATION

(11) **EP 2 698 747 A1**
(43) Date of publication of application: **19.02.2014**
(21) Application number: 12306004.8
(22) Date of filing: 14.08.2012
(51) Int. Cl.: G06N 5/02, G06N 5/04

(54) **System and method for storing and providing data that indicate the level of expertise or knowledge of a user**

(71) Applicant: Alcatel Lucent, 75007 Paris (FR)
(72) Inventor: Lou, Zhe, 2640 Mortsel (BE)
(74) Representative: MERH-IP Matias Erny Reichl Hoffmann

(57) **Abstract**

The present invention relates to knowledge repository systems for providing data that indicate the expertise, knowledge or experience of a user. A system for providing data that indicate the expertise, knowledge or experience of a user is proposed that comprises a semantic reasoning means (13) configured to analyze sensor data received from at least one sensor configured to generate sensor data by sensing an activity of a user (2) in order to infer personal knowledge data of the user (2) based on a predetermined domain ontology, wherein the personal knowledge data indicate a skill, expertise or experience of the user (2); a personal knowledge database (15) configured to store the inferred personal knowledge data of the user (2) in a semantic data model; and a search engine (14) means configured to perform a search within the personal knowledge database (15) to determine knowledgeable users whose personal knowledge data indicate that they have a desired skill or expertise.

## Description

The present invention relates to knowledge repository systems for storing and providing data that indicate the expertise, knowledge or experience of a user.

This invention aims to create a personalized expert network from which users can easily find an "expert" or knowledgeable person, preferably within the user's social network, who has a particular expertise, knowledge or experience and who might know the answer of a question.

A particular, but non-exhaustive, application of the invention lies in organizational knowledge repository systems that provide access to competencies available within an organization. Known systems rely on each person to complete a self-assessment of competency, which is later used when searching for specific knowledge areas. The disadvantage of self- assessment-based systems is that the results of self-assessment are subjective, based on each person's self-perception and are hard to normalize across a larger population. A further disadvantage is that the information used to describe the profile of a person is usually quite limited and incomplete. It is not possible to deposit all of the persons' experience in detail online. The provided information is also static since it requires a manual update. Another disadvantage is that typically, people find it difficult to make time to keep their resumes and skill profiles updated.

Online expert consultation is also widely used in the e-health domain where patients could look online for expert (specialized) doctors to get advice on specific health issues. It consumes a large amount of time and effort to build such a system where doctors are categorized by their expertise in a complex tree structure. Such systems are often static and not intelligent. The information used to describe the profile of a doctor is usually limited and does not contain all of the doctors' experience. Such systems also cannot tap into the knowledge of patients who often have acquired relevant knowledge and experience about certain diseases, treatment methods, etc.

Moreover, people tend to ask colleagues, friends or families rather than experts when they encounter some questions and issues, if they believe that colleagues, friends or families with a specific background might know the answer. However, even for some rather trivial issues in normal life, such as how to set a password for a document created with a particular word processor, it is difficult to quickly find out the person within one's own social network who might know the answer to a particular question.

In view of the above problems, the present invention seeks to provide an improved system and method for creating a personalized expert network from which users can easily find an "expert" or knowledgeable person within their social network who might know the answer of a question.

The invention is set forth and characterized according to the subject-matter of the independent claims, while the dependent claims describe preferred embodiments of the invention.

A system for providing data that indicate the expertise, knowledge or experience of a user is proposed. The system comprises a semantic reasoning means that uses one or multiple domain ontologies in order to reason about sensor data that are generated by sensing an activity of a user. The domain ontology formally represents knowledge as a set of concepts within a particular domain or technical field, and the relationships among those concepts based on which the sensor data can be analyzed to derive conclusions on the user's knowledge. The one or more domain ontologies are selected or created depending on the application or usage scenario of the system. This allows the reasoning module to infer knowledge hat is also modeled in the underlying domain ontology.

A semantic reasoning engine is capable of inferring logical consequences from a set of asserted facts or axioms. The inference rules are commonly specified by means of an ontology language. Typical ontology languages are Web Ontology Language (OWL), Resource Description Framework (RDF) and RFD Schema and so on. Examples of existing semantic reasoning engines that support OWL, RDF and RDFS are Jena, Protégé, Drools, etc.

The semantic reasoning means is configured to analyze the generated or fused sensor data in order to infer personal knowledge data of the user based on the predetermined domain ontology, wherein the personal knowledge data indicate a expertise, knowledge or experience of the user. In other words, the semantic reasoning means is able to infer logical consequences from the sensed user data based on a set of inference rules that may be specified by means of an ontology language. By way of example, the semantic reasoning means may be an inference engine. The inferred personal knowledge data may be stored in a personal knowledge database using a semantic data model. A semantic data model is a conceptual data model in which semantic information is included. The semantic data model typically describes the meaning of its instances and is an abstraction that defines how the stored symbols (the instance data) relate to the real world. Furthermore, a semantic data model is a conceptual data model capable to express information and that enables to interpret meaning (semantics) from the instances. Semantic models are typically fact oriented and facts are typically expressed by binary relations between data elements. Data symbols may be organized linearly and hierarchically to describes the meaning of its instances. In other words, a semantic data model is an abstraction that defines how the stored symbols (the instance data) relate to the real world. By representing the real world within such data sets, reasoning engines can interpret the sensed worldly information without human interpretation.

The semantic reasoning means is configured to receive sensor data from at least one sensor configured to generate sensor data by sensing an activity of a user. According to an aspect of the invention, the system may also comprise at least one sensor configured to generate sensor data by sensing an activity of a user.

According to an aspect of the invention, the at least one sensor is a software sensor configured to monitor a user's interaction with a computing device. By way of example, the computing device may be a computer, a mobile phone, a smartphone, a PDA or a tablet computer. A software sensor may be realized as a program running on the user's computing device. By way of example, the software sensor is configured to monitor text inputted into the computing device by the user.

The software sensor may monitor the interaction of the user with a user interface of the computing device. For example, the software sensor may track the menu options the user clicked and the functions used, the websites the user visited, etc to monitor the user's activity.

According to a further aspect, the sensor is a hardware sensor, e.g. at least one of a pressure sensor, temperature sensor, or GPS sensor. The user's activity may also be tracked both by a software sensor and a hardware sensor. By way of example, the user's interaction with a mobile computing device, such as a smartphone, is tracked using a software sensor installed on the smartphone while at the same time, a GPS sensor provided in the smartphone tracks the locations of the user.

According to an aspect of the invention, the system may further comprise a data fusion means configured to detect and to remove irregular or redundant sensor data.

According to a further aspect, the system may comprise a plurality of different sensors configured to generate sensor data by sensing an activity of a user and the data fusion means may be a multi-sensor data fusion means which increase the accuracy with which a user activity can be observed and characterized by integrating data from multiple sensor sources to synthesize the new information so that the whole is greater than the sum of its parts. By way of example, the data fusion means is configured to use at least one of a Kalman filter, Bayesain Networks or a Dempster-Shafer algorithm. The Kalman filter typically uses a series of measurements from various sensors observed over time to produce estimates of unknown variables that is more precise than any of the individual measurements. The core of the Kalman filter is that it averages a prediction of a system's state with a new measurement using a weighted average. The purpose of the weights is that values with better estimated uncertainty are trusted more. The weights are calculated from the covariance, a measure of the estimated uncertainty of the prediction of the system's state. The result of the weighted average is a new state estimate that lies in between the predicted and measured state and has a better estimated uncertainty than either alone. A typical usage of the Kalman filter in the data fusion is the optimization of the navigation data from multiple location sensors. A Bayes network or probabilistic directed acyclic graphical model is a probabilistic graphical model that represents a set of random variables and their conditional dependencies via a directed acyclic graph, while Dempster-Shafer theory is a generalization of the Bayes theory of subjective probability.

The proposed system is therefore capable of receiving or generating activity data of users and based on the generated activity data, automatically discovering and inferring knowledge, experience or expertise of the users.

In order to make the stored personal knowledge data accessible to other users, the system further comprises a search engine means configured to perform a search within the personal knowledge database to determine knowledgeable users whose personal knowledge data indicate that they have a desired skill or expertise. According to a further aspect of the invention, the search engine means may be configured to restrict the search for knowledgeable users to a predetermined subset of users, e.g. a social network that is associated with a user of the system who is interested in finding a person that can answer his question and who makes an in inquiry.

According to a further aspect of the invention, the inferred personal knowledge data of the user may include an indication of a level of the skill, knowledge or experience of the user, wherein the level increases with the frequency and/or recency of the sensed user activity that corresponds to the inferred skill or expertise. This has the advantage that the system can not only identify knowledge of users but can also automatically differentiate between the levels of expertise of different users without requiring a self-assessment of the users. According to a further aspect, the level of the skill, knowledge or experience of the user includes a score value and wherein the search engine provides a list of knowledgeable users that is ranked based on the score value to help other users to quickly identify the most knowledgeable person among a list of potential candidates.

According to a further aspect, the system is configured to automatically update profiles of the users based on the inferred personal knowledge data of the users. The personal knowledge database may be updated in real-time as the sensor data is generated and processed by the semantic reasoning means. This has the advantage the user profiles are always up-to-date in contrast to systems know in the art that require a manual profile update of the users. Alternatively, the user profiles may be updated in predetermined intervals during which sensor information is collected and analyzed.

According to a further aspect of the invention, a method for providing data that indicate the expertise, knowledge or experience of a user is proposed, comprising the steps of analyzing sensed activity data in order to infer personal knowledge data of the user based on a predetermined domain ontology, wherein the sensed activity data is generated by sensing an activity of a user, and wherein the personal knowledge data indicate a skill, expertise or experience of the user; storing the inferred personal knowledge data of the user in a personal knowledge database using a semantic data model; and performing a search within the personal knowledge database to determine knowledgeable users whose personal knowledge data indicate that they have a desired skill or expertise.

The proposed system and method allows automatic collection of data indicative of expertise, knowledge or experience of users. The data is stored in a knowledge repository system and made available to other users who are interested in finding a person that has a particular expertise, knowledge or experience. A search engine allows retrieval of user profiles that match a search query. Thus, one can conveniently find the right person to answer a question about a particular subject.

The invention is explained below in an exemplary manner with reference to the accompanying drawings, wherein
- Fig. 1: illustrates schematically a system according to an embodiment of the invention;
- Fig. 2: illustrates schematically a server used in a system according to an embodiment of the invention; and
- Fig. 3: illustrates schematically a sequence of steps for carrying out method according to an embodiment of the invention.

The embodiments described below give various examples of a system for storing and providing data that automatically collects and indicates the expertise and knowledge of a user.

While a plurality of embodiments are described below, it is clear to a person skilled in the art that individual features from more than one embodiment may be combined and that the disclosure of the present document extends to every possible combination of features described in conjunction with the embodiments. In particular, features disclosed in combination with an example method may also be combined with embodiments relating to an example system and vice versa.

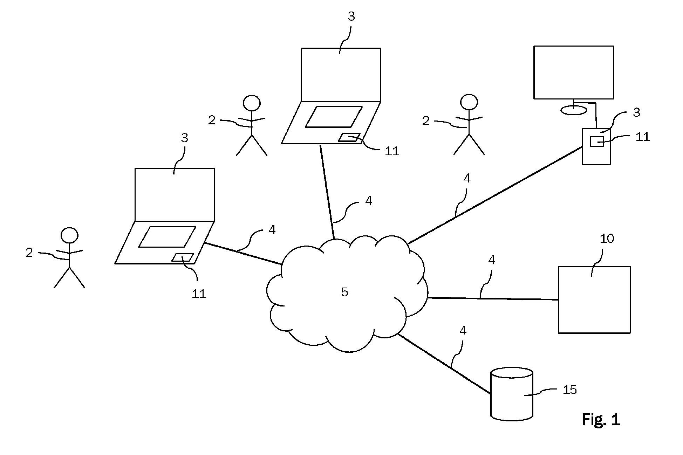

Fig. 1 illustrates schematically a system for storing and providing data that automatically collects and indicates the expertise and knowledge of a user according to an embodiment of the invention. The embodiment relates to an example where the system is used as an organizational knowledge repository system 1. Other applications, such as using the system as a medical and health knowledge repository system or as a knowledge network based on the user's social network are possible and within the scope of the patent disclosure.

The proposed system is capable of automatically and intuitively discovering and identifying intellectual capital within an organization by inferring knowledge, experience and expertise of the people within an organization. The identified knowledge of the users is stored in a database and made accessible to other users.

According to this embodiment, computers 3 of users 2 of an organization are equipped with software sensors 11. A software sensor is realized as a program running on user's computer 3. The sensor program is used to monitor user's behavior and interaction with the computer 3. For instance, the sensor 11 can monitor the text the users 2 typed into the computer 3, the menu options the user 2 clicked and the functions used, the websites the user 2 visited, etc. The software sensor 11 usually operates in the background but it can be configured to determine what type of user activities are monitored on the computer 3. For example, the software sensor 11 could be configured to only monitor the text written by a user using a company's product development or knowledge sharing tools, but can also include all e-mails typed by the user. The software sensor 11 could be configured to track and monitor the programs used by the user 2, the topics written in documents and/ or discussed in e-mails, etc. The software sensor 11 could identify and monitor the news groups, discussion groups, and/or RSS feeds of the user 2 to capture the user's areas of interest and expertise.

The data generated by the software sensor 11 are then transmitted via a network connection 4 to a central server 10 within the organizational network 5. The central server 10 collects data from all computers 3 within a predetermined group equipped with the software sensor 11 over an internet or intranet connection 4.

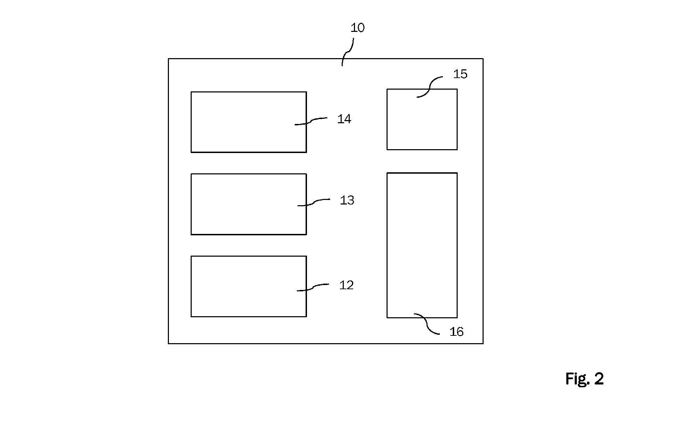

The central server is illustrated in more detail in Fig. 2. The central server 10 is equipped with a CPU 15 which executes the various software modules, e.g. the data fusion module 12 that is responsible for combining the sensed user data from multiple sources. A data fusion module is capable of detecting and removing irregular or redundant data. For instance, if a user 2 repeats clicking the same menu item for several times, the data fusion module 12 will filter out the redundancy and will report the menu item clicking event only once, preferably with the frequency of the clicking event. Various sensor fusion algorithms known to the person skilled in the art can be applied, such as a Kalman filter, Bayesian Networks, or the Dempster-Shafer algorithm.

The central server 10 further comprises a semantic reasoning module 13 that is configured to analyze the fused sensor data in order to infer personal knowledge data from the sensor data based on a predetermined domain ontology 16 which is also stored on the central server. For instance, if the software sensor 11 is configured to monitor the menus the user 2 clicked on his computer 3, then the sensor data might contain the data sequence "click Tools in Word Processor Version 3.0" → "click Protect Document in Word Processor Version 3.0" → "input 1234 in popup window in Word Processor Version 3.0". Based on this sensed data sequence, the reasoning module 13 can deduce that this person is setting a password to a document created with the Word Processor Version 3.0. From this, the reasoning module 13 can conclude that this person might also know how to set a password to a document created with the Word Processor Version 2.0. Moreover, if the sensor data contain the information that the user 2 has set a password to a document in a previous version of this particular word processor, then the reasoning module 13 may deduce that this person 2 is also capable of setting passwords for documents created with different versions of this particular word processor. Similarly, if the sensor data contain information that the user 2 has set passwords for different types of documents created with different programs, then the reasoning module 13 may deduce that this person 2 is a potential expert for setting passwords for all kinds and types of documents.

Various reasoning systems known in the art can be applied to implement a reasoning module 13 as described above such as expert systems, rule engines, cognitive systems, machine learning systems, case-based reasoning, procedural reasoning, etc. These types of reasoning modules are also referred to in the art as reasoning engines or inference engines.

The personal knowledge data inferred by the reasoning module 13 is stored in the personal knowledge database 15 connected to the server 10. Based on the example outlined above, the personal knowledge data created by the reasoning module indicates that the user 2 has the particular expertise of setting passwords in the used word processor.

Likewise, if the reasoning module detects that a user has written a certain number of e-mails related to a certain subject, e.g. air flow sensors, or if the user has visited a certain number of websites related to that subject within a certain period of time, e.g. websites that included the keyword "air flow sensor", then the reasoning module might deduce that the user has a high level of expertise in the particular field of air flow sensors.

Alternatively, the level of expertise of a user 2 might be inferred from the type of meetings a user 2 has attended recently. This information can be detected by a software sensor 11 that is configured to monitor the software calendar entries and e-mails related to meetings. The sensor tracks 11 the meeting topic by capturing the entries in the "Subject:" field and the text, such as the meeting agenda, included in the meeting invite. The reasoning module 13 analyzes the sensed meeting data using one or more domain ontologies 16 to infer the personal knowledge data.

A domain ontology 16 (or domain-specific ontology) models a specific domain, which represents part of the world. Known ontology languages can be used to encode the ontology. Particular meanings of terms applied to that domain are provided by the domain ontology. For example the word "card" has many different meanings. An ontology about the domain of poker would model the "playing card" meaning of the word, while an ontology about the domain of computer hardware would model the "punched card" and "video card" meanings. These domain ontologies therefore formally represent knowledge as a set of concepts within a particular domain or technical field, and the relationships, e.g. using a tree representation, among those concepts based on which the sensor data can be analyzed to derive conclusions on the user's knowledge.

It will be appreciated that the one or more ontologies used for the proposed system will depend on the particular application scenario and context, i.e. the domain, for which the system will be applied and that the present invention is not restricted to any particular domain. For medical and health knowledge repository system, numerous domain ontologies in the medial and healthcare arena already exist that can be used or further developed as required (see examples provided further below). Many domain specific ontologies for various industries or technical fields exists, such as the Agricultural Ontology Service representing a knowledge framework in the area of food and agriculture, the Railway Domain Ontology, ontologies for location-based services etc.

The inferred personal knowledge data of the user is stored in a personal knowledge database 15 using a semantic data model. In other words, the personal knowledge database 15 is a semantic database. The semantic data model of the personal knowledge database depends on the used domain ontology in the semantic reasoning module. Thus, the inferred personal knowledge data is stored in the personal knowledge database 15 in a way that allows defining the meaning of the stored data within the context of its interrelationship with other data which represents the sensed real word activity of the user 2.

The personal knowledge data inferred by the reasoning module 13 might further include a level of the skill expertise or experience of the user 2. The reasoning module is configured such that the level increases with the frequency and/or recency of the sensed user activity that corresponds to the inferred skill or expertise. For example, if the sensed activity of setting a password to a document created with the word processor happened ten years ago, the reasoning module might take the timing into account and deduce that this person "might" know or might have forgotten how to set a password to such a document.

Thus, the level of expertise, knowledge or experience may be weighted with the frequency, the recency, and/or the relevance of the corresponding fused sensor data based on which the personal knowledge data is inferred. The level of expertise may be implemented as a score value associated with the corresponding knowledge data. The more frequent or the more recent the knowledge data, the higher the resulting score value. Furthermore, based on the underlying domain ontology, the relevance of the knowledge data may be determined as an additional weighting factor for the score value.

For example, if the sensor data indicate that person A has set a password for a document created with a Word Processor of company X and that person B has set a password for a PDF document with a PDF viewer, then it is more likely that the knowledge of person A is more relevant than the knowledge of person B for the question of how to set a password for a spreadsheet document also created with a program of company X. The reason is that it is more likely that the steps for setting a password are more similar between two different documents types of software manufacturer X than between a document type of software manufacturer X and a PDF document. In the above illustrative example, the knowledge of person A might therefore be judged to be more relevant for the question of how to set a password for a spreadsheet document of software manufacturer X.

It will be appreciated that the range of knowledge data derivable by the reasoning module is not restricted to the above example which only serves to illustrate application examples of the invention.

The stored personal knowledge data may be made accessible to other users through a search engine that is configured to perform a search within the personal knowledge database to determine other knowledgeable users whose personal knowledge data indicate that they have a desired skill or expertise. The return of such a search query may be only the name of the person, but not the content of the personal knowledge data to safeguard the privacy of the user's knowledge data.Thus, the sensed activity data of the user and the personal knowledge data are not directly accessible for other users to ensure the privacy of the user's personal data.

According to an embodiment, the search of a user submitting a search request is restricted to the social network of the user, i.e., to other users registered as first degree contacts of the user within the personal knowledge database. According to a further embodiment, the search may be extended to second degree contacts (i.e. friend of a friend) or third degree contacts. Each user of the knowledge repository system may also define the extent his personal knowledge data is made accessible through a search and may also restrict certain users or user groups, or other subsets of users based on geographical proximity or organizational relationships from having access to his personal knowledge data.

The above-described system provides the advantage that data indicating the skills, expertise and experience of users are automatically generated by sensing the activity of the user. The corresponding user profiles can therefore be automatically generated so that the system does not have to rely on each user to complete a self-assessment of competency to uncover and map organizational expertise. The system can also make knowledge and experience of users accessible to other users which would normally not have been entered manually in a user's skill profile such as how to set a password in a Word document, etc. The present system is thereby capable of automatically and intuitively discovering and identifying intellectual capital within an organization.

Another application of the invention lies in medical and health knowledge repository systems that provide access to competencies of doctors and medical experts. According to an embodiment, the computers used by physicians and medical experts are equipped with a software sensor. The software sensor 11 is configured to generate sensor data, e.g. by monitoring the entries of the physicians made in the electronic medical records (EMRs) of their patients. For example, the software sensor may be configured to track the diagnostic codes entered in the EMR record, the diagnosis written in the diagnosis field, the prescribed medication list, or the treatment plan, etc. The sensed EMR data is then stored in a database or provided directly to the semantic reasoning module 13.

The semantic reasoning modules 13 might use or adapt one of the already existing ontologies such as the Disease Ontology, the Ontology for Biomedical Investigations, Gene Ontology for genomics, the bioPAX ontology, etc. Alternatively, a new ontology adapted to the specific domain for which the system is designed is created to deduce knowledge and expertise of the physicians based on the sensor data such as the extracted data of the EMRs.

By way of example, if over a time, the software sensor 11 has generated sensor data that indicate that a physician has made entries in electronic medical records relating to non-invasive knee surgery, the reasoning module will conclude that the physician is an expert or has experience in the field of non-invasive knee surgery. By storing this knowledge data in a personal knowledge database, a search engine 14 can identify this physician as a potential expert in the field of non-invasive knee surgery. The proposed system thereby automatically catalogs the medical competencies, in a way that could later be queried across the organization or could be made accessible beyond the organization.

According to a further embodiment, the above system can also be modified to tap into the knowledge of patients who often have acquired relevant knowledge and experience about certain diseases or treatment methods. In this case, a software sensor on the user's computer monitors the user's e-mails or visits of relevant health-related websites, posting in health forums etc. Based on such data, the reasoning module can infer whether a user has acquired relevant knowledge and experience about certain diseases or treatment methods.

According to another embodiment, a user is equipped with a hardware sensor such as a GPS sensor that monitors and records the movement of the user. By way of example, the GPS sensor could be a GPS sensor integrated in a smartphone that stores or transmits the sensed location data of the user. Such a GPS sensor could, for example, record the movement of a user along a hiking trail. From this information, the semantic reasoning means can deduce that the user has gathered experience on this specific hiking trail. If the user has completed multiple hiking trails with the recent past, the reasoning module might infer that the user is a knowledgeable person in the field of hiking in general and related outdoor activities. Such information is then stored in the personal knowledge database associated with the user's profile. Another person within the social network of the user may then query the database using the search engine for persons who have walked already a particular hiking trail, and the system will then return the user as a potential knowledgeable person than can share his experience.

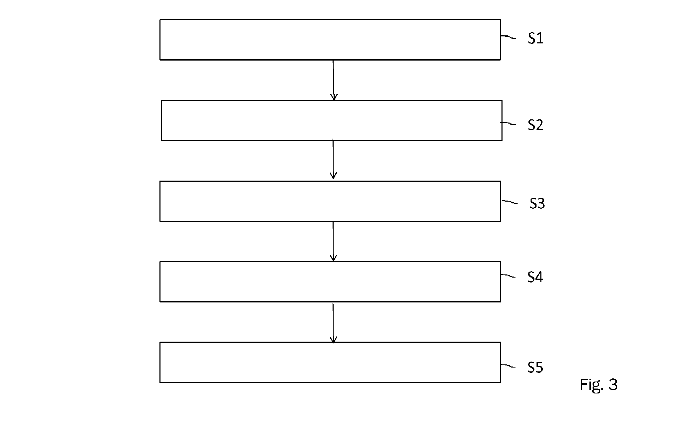

Fig. 3 shows a method for providing data that indicate the expertise, knowledge or experience of a user according to an embodiment. In step S1, activity data is generated by sensing an activity of a user. The activity data can be provided using one or more software or hardware sensors as described above that are configured to monitor the activities of a user. In optional step S2, the generated sensor data are fused with a data fusion means that is configured to detect and to remove irregular or redundant sensor data. For example, the sensor data are fused by using at least one of a Kalman filter, Bayesain Networks or a Dempster-Shafer algorithm.

In step S3, the sensed or the fused sensor data are analyzed in order to reason about the sensor data and to infer personal knowledge data of the user. This reasoning is carried out using one or multiple domain ontologies that formally represent knowledge as a set of concepts within a particular domain or technical field, and the relationships among those concepts based on which the sensor data can be analyzed to derive conclusions on the user's knowledge. The one or more domain ontologies are selected or created depending on the application or usage scenario of the system. This allows the reasoning module to infer knowledge hat is also modeled in the underlying domain ontology.

In step S4, the inferred personal knowledge data of the user is stored in a personal knowledge database using a semantic data model. In order to make the generate knowledge accessible to other users, a search is performed within the personal knowledge database in step S5 to determine knowledgeable users whose personal knowledge data indicate that they have a desired skill or expertise. The search returns a list of knowledgeable users.

The above examples show that numerous application examples exist for the present invention.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A system for providing data that indicate the expertise, knowledge or experience of a user, comprising
- a semantic reasoning means (13) configured to analyze sensor data received from at least one sensor configured to generate sensor data by sensing an activity of a user (2), in order to infer personal knowledge data of the user (2) based on a predetermined domain ontology, wherein the personal knowledge data indicate an expertise, knowledge or experience of the user (2);
- a personal knowledge database (15) configured to store the inferred personal knowledge data of the user (2) in a semantic data model; and
- a search engine means (14) configured to perform a search within the personal knowledge database (15) to determine knowledgeable users whose personal knowledge data indicate that they have a desired expertise, knowledge or experience.

2. System according to claim 1, further comprising data fusion means (12) configured to detect and to remove irregular or redundant sensor data.

3. System according to claim 1 or 2, wherein the system is configured to receive sensor data from a plurality of different sensors configured to generate sensor data by sensing activities of the user (2) and the data fusion means is a multi-sensor data fusion means.

4. System according to any of the preceding claims, wherein the at least one sensor comprises a software sensor (11) configured to monitor the user's interaction with a computing device (3).

5. System according to claim 4, wherein the software sensor is configured to monitor text inputted into the computing device (3) by the user (2).

6. System according to claim 4 or claim 5, wherein the software sensor is configured to monitor the interaction of the user with a user interface of the computing device (3).

7. System according to claim 1 to 3, wherein the sensor comprises at least one of a pressure sensor, temperature sensor, or GPS sensor.

8. System according to any of the preceding claims, wherein the inferred personal knowledge data of the user include an indication of a level of the expertise, knowledge or experience of the user.

9. System according to claim 8, wherein the level increases with the frequency and/or recency of the sensed user activity that corresponds to the inferred expertise, knowledge or experience.

10. System according to claim 8 or claim 9, wherein the level of the expertise, knowledge or experience of the user includes a score value and wherein the search engine (14) provides a list of knowledgeable users that is ranked based on their respective score value.

11. System according to any of the preceding claims, wherein the search engine means (14) is configured to restrict the search for knowledgeable users to a predetermined social network defining a subset of users that is associated with a user of the system.

12. System according to any of the preceding claims, wherein the system is configured to automatically update profiles of the users based on the inferred personal knowledge data of the users.

13. System according to any of the preceding claims, wherein the data fusion means (12) is configured to use at least one of a Kalman filter, Bayesain Networks or a Dempster-Shafer algorithm.

14. System according to any of the preceding claims, wherein the semantic reasoning means (13) uses an inference engine.

15. A method for providing data that indicate the expertise, knowledge or experience of a user, comprising the steps of
- analyzing sensed activity data in order to infer personal knowledge data of the user based on a predetermined domain ontology, wherein the sensed activity data is generated by sensing an activity of a user, and wherein the personal knowledge data indicate a expertise, knowledge or experience of the user;
- storing the inferred personal knowledge data of the user in a personal knowledge database using a semantic data model; and
- performing a search within the personal knowledge database to determine knowledgeable users whose personal knowledge data indicate that they have a expertise, knowledge or experience.
